# EUROPEAN PATENT SPECIFICATION

(11) **EP 3 672 297 B1**
(45) Date of publication and mention of the grant of the patent: **20.07.2022**
(21) Application number: 19791870.9
(22) Date of filing: 16.04.2019
(51) Int. Cl.: H04W 8/08, H04W 36/32

(54) **ROAMING SWITCHING METHOD, CENTRAL CONTROL DEVICE AND CLIENT**
VERFAHREN ZUR ROAMING-UMSCHALTUNG, ZENTRALE STEUERUNGSVORRICHTUNG UND CLIENT
PROCÉDÉ DE COMMUTATION D'ITINÉRANCE, DISPOSITIF DE COMMANDE CENTRAL ET CLIENT

(30) Priority: 28.04.2018 CN 201810402145
(43) Date of publication of application: 24.06.2020
(73) Proprietor: Huawei Technologies Co., Ltd., Guangdong 518129 (CN)
(72) Inventor: ZHANG, Jingmin, Shenzhen, Guangdong 518129 (CN); WEI, Hanyu, Shenzhen, Guangdong 518129 (CN); HU, Yinliang, Shenzhen, Guangdong 518129 (CN)
(74) Representative: Pfenning, Meinig & Partner mbB
(86) International application number: PCT/CN2019/082833
(87) International publication number: WO 2019/205982

(56) References cited:
- WO-A1-00/28768
- CN-A- 1 992 971
- CN-A- 101 150 839
- CN-A- 101 883 312
- CN-A- 103 686 890
- CN-A- 107 306 386
- US-A1- 2007 268 859
- WISNIEWSKI L ET AL: "Location-based handover in cellular IEEE 802.11 networks for Factory Automation", EMERGING TECHNOLOGIES AND FACTORY AUTOMATION (ETFA), 2010 IEEE CONFERENCE ON, IEEE, PISCATAWAY, NJ, USA, 13 September 2010 (2010-09-13), pages 1-8, XP031937240, DOI: 10.1109/ETFA.2010.5641296 ISBN: 978-1-4244-6848-5

## Description

### TECHNICAL FIELD

This application relates to the communications field, and in particular, to a roaming handoff method, a central control device, a computer-readable storage medium and a computer program product.

### BACKGROUND TECHNOLOGY

Inter-frequency networking is usually used for access in a high-density scenario in a wireless local area network (wireless local area networks, WLAN), to mitigate co-channel interference. When performing a roaming handoff between different WLAN access points, a station (station, STA) needs to rescan channels and access a new access point, causing an excessively long access time. This may cause communication interruption and affect user experience.

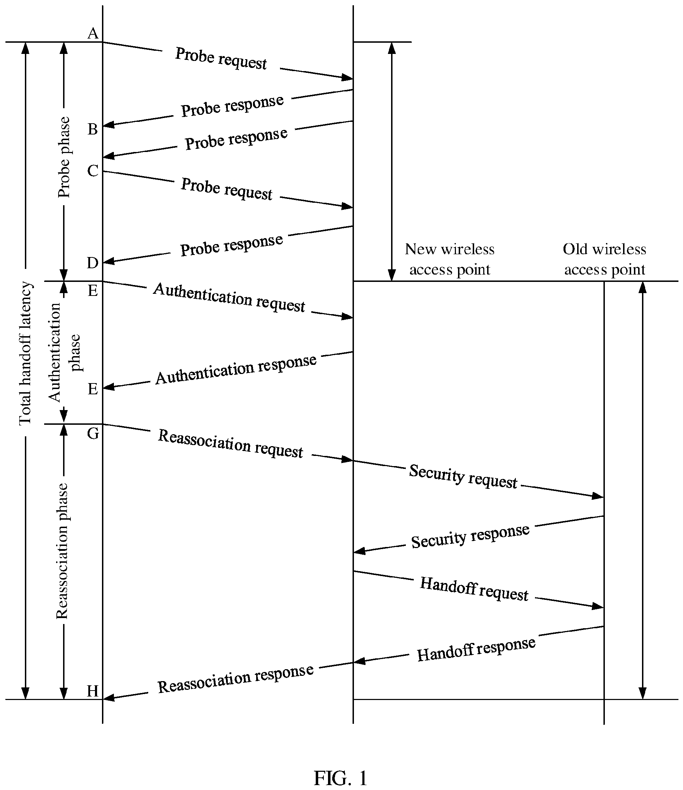

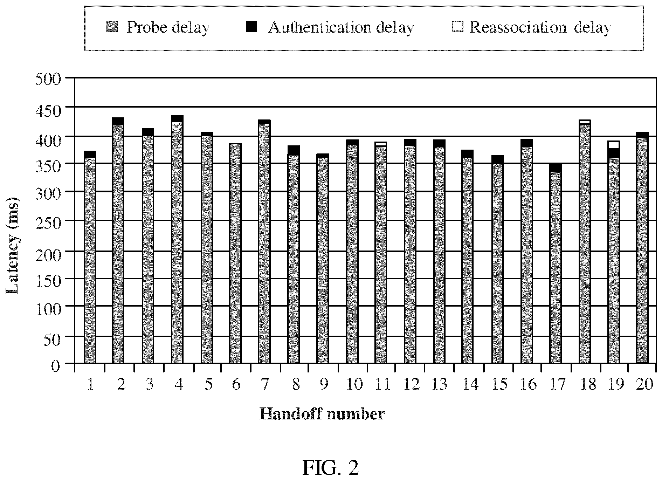

FIG. 1 is a typical signaling flowchart of a roaming handoff performed by a STA. A roaming handoff process of the STA includes three phases: a wireless access point (access point, AP) scanning and reconnection (probe delay) phase, an authentication (authentication) phase, and a reassociation (reassociation) phase, where the STA initiates a connection request on each channel in the probe delay phase, and selects an AP with best signal quality to initiate a subsequent authentication request and reassociation request. The entire roaming handoff requires 200 ms to 300 ms or more, and a channel scanning process accounts for 80% to 90% of the time. Specific statistics on a delay of each phase are shown in FIG. 2, which is a schematic diagram of statistics on delays of the handoff phase. Because one data packet occurs every 20 ms in a voice service, and one frame occurs every 17 ms in a video service, a packet in the handoff process may be lost due to a signaling interaction delay of the STA in the roaming handoff process, and a long-time roaming handoff causes service interruption. Therefore, a fast roaming handoff of the STA in the inter-frequency networking is required, to ensure that a service is not affected in the roaming process.

WISNIEWSKI L ET AL.: "Location-based handover in cellular IEEE 802.11 networks for Factory Automation", EMERGING TECHNOLOGIES AND FACTORY AUTOMATION (ETFA), 2010 IEEE CONFERENCE ON, IEEE, PISCATAWAY, NJ, USA, 2010-09-13, pages 1-8, XP031937240, DOI: 10.1109/ETFA. 2010. 5641296, ISBN: 978-1-4244-6848-5, discloses coordinating the handover procedure by a central authority, the FC in the ^{flex}WARE architecture. In detail, if a particular position is reached, the FC progresses to the next phase, where it choses a FAP (Future AP) for the HO. After the one FAP has been chosen, the FC sends a HO trigger frame to the FN with information about FAP.

### SUMMARY

The present invention is as defined in the appended independent claims. Further embodiments are disclosed in the appended dependent claims. Embodiments of this application provide a roaming handoff method, to greatly shorten a scanning wait time in a handoff process of a STA, greatly shorten a time for a roaming handoff of the STA, and implement fast roaming of the STA in inter-frequency networking.

In view of this, a first aspect of the embodiments of this application provides a roaming handoff method, and the method may include: determining, by a central control device, at least one target remote access unit RRU based on a location and a displacement vector of a station; sending, by the central control device, a channel switching instruction to an original RRU, where the channel switching instruction includes at least one target RRU; and sending, by the central control device, a first preferential access right reservation notification to a first target RRU, where the first target RRU is one of the at least one target RRU. It can be understood that a time sequence of sending, by the central control device, the channel switching instruction to the original RRU and sending, by the central control device, the first preferential access right reservation notification to the first target RRU is not limited. The method may further include: receiving, by the central control device, a first connection request sent by the first target RRU; and sending, by the central control device, a first connection response to the first target RRU, where the first connection response includes a first connection return code.

In this embodiment of this application, the central control device sends the recommended target remote access unit to the STA, and controls the first target remote access unit to reserve a preferential access right for the STA, preferentially reply to a connection request from the STA, and preferentially provide access for the STA. In this way, a scanning wait time in a handoff process of the STA can be greatly shortened, a time for a roaming handoff of the STA can be greatly reduced, and fast roaming of the STA in inter-frequency networking can be implemented.

Optionally, in some embodiments of this application, the channel switching instruction includes: a list of recommended channels, where the list of recommended channels includes the at least one target RRU in a priority sequence. It can be understood that the channel switching instruction may carry indication information of one target RRU, or may carry indication information of the list of recommended channels. The first target RRU is an RRU that has a highest priority in the at least one target RRU.

Optionally, in some embodiments of this application, the method may further include: sending, by the central control device, a second preferential access right reservation notification to the original RRU if the central control device does not receive the first connection request; receiving, by the central control device, a second connection request sent by the original RRU; and sending, by the central control device, a second connection response to the original RRU, where the second connection response includes a second connection return code.

In this embodiment of this application, the STA actively switches back to an original operating channel after a handoff access fails, and the central control device instructs the original remote access unit to reserve a preferential access right for the STA. This is an optional implementation for the STA after a handoff failure. Subsequently, the central control device restarts a handoff procedure of the solution based on a handoff determining result.

Optionally, in some embodiments of this application, the method may further include: sending, by the central control device, a third preferential access right reservation notification to a second target RRU if the central control device does not receive the second connection request; receiving, by the central control device, a third connection request sent by the second target RRU; and sending, by the central control device, a third connection response to the second target RRU, where the third connection response includes a third connection return code.

In this embodiment of this application, the STA may switch from the original operating channel to a third operating channel after a handoff access fails on the original operating channel, and the central control device instructs the original remote access unit to reserve a preferential access right for the STA. This is an optional implementation for the STA after a handoff failure, improving feasibility of the technical solution in this application.

Optionally, in some embodiments of this application, the sending, by the central control device, a second preferential access right reservation notification to the original RRU if the central control device does not receive the first connection request may include: sending, by the central control device, the second preferential access right reservation notification to the original RRU if the central control device does not receive the first connection request within preset duration.

A second aspect of the embodiments of this application provides a roaming handoff method, and the method may include: receiving, by a station, a channel switching instruction sent by an original remote access unit RRU; switching, by the station, from an original operating channel to a first recommended channel, where the original RRU corresponds to the original operating channel, and the first recommended channel corresponds to the first target RRU; sending, by the station, a first connection request to the first target RRU by using the first recommended channel, where the first target RRU is one of the at least one target RRU; and receiving, by the station by using the first recommended channel, a first connection response sent by the first target RRU, where the first connection response includes a first connection return code.

In this embodiment of this application, the STA receives the recommended target remote access unit sent by the central control device, and the central control device controls the first target remote access unit to reserve a preferential access right for the STA, preferentially reply to a connection request from the STA, and preferentially provide access for the STA. In this way, a scanning wait time in a handoff process of the STA can be greatly shortened, a time for a roaming handoff of the STA can be greatly reduced, and fast roaming of the STA in inter-frequency networking can be implemented.

Optionally, in some embodiments of this application, the channel switching instruction includes: a list of recommended channels, where the list of recommended channels includes the at least one target RRU in a priority sequence. It can be understood that the channel switching instruction may carry indication information of one target RRU, or may carry indication information of the list of recommended channels. The first target RRU is an RRU that has a highest priority in the at least one target RRU.

Optionally, in some embodiments of this application, the method may further include: switching, by the station, from the first recommended channel to the original operating channel if the station does not receive, within first preset duration, the first connection response sent by the first target RRU, or the first connection return code indicates that a connection fails; sending, by the station, a second connection request to the original RRU by using the original operating channel; and receiving, by the station by using the original operating channel, a second connection response sent by the original RRU, where the second connection response includes a second connection return code.

In this embodiment of this application, the STA actively switches back to the original operating channel after a handoff access fails, and the central control device instructs an original remote access unit to reserve a preferential access right for the STA. This is an optional implementation for the STA after a handoff failure. Subsequently, the central control device restarts a handoff procedure of this solution based on a handoff determining result.

Optionally, in some embodiments of this application, the method may further include: switching, by the station, from the original operating channel to a second recommended channel if the station does not receive, within second preset duration, the second connection response sent by the original RRU, or the second connection return code indicates that a connection fails, where the second recommended channel corresponds to the second target RRU; sending, by the station, a third connection request to the second target RRU by using the second recommended channel, where the second target RRU is one of the at least one target RRU; and receiving, by the station by using the second recommended channel, a third connection response sent by the second target RRU, where the third connection response includes a third connection return code.

In this embodiment of this application, the STA may switch from the original operating channel to a third operating channel after a handoff access fails on the original operating channel, and the central control device instructs the original remote access unit to reserve a preferential access right for the STA. This is an optional implementation for the STA after a handoff failure, improving feasibility of the technical solution in this application.

Still another aspect of the embodiments of this application provides a roaming handoff method, and the method may include: receiving, by a remote access unit RRU, a first preferential access right reservation notification sent by a central control device; receiving, by the RRU by using a first recommended channel, a first connection request sent by the station; sending, by the RRU, the first connection request to the central control device based on the preferential access right reservation notification; receiving, by the RRU, a first connection response sent by the central control device, where the first connection response includes a first connection return code; and sending, by the RRU, the first connection response to the station by using the first recommended channel.

Still another embodiment of this application provides a central control device that has functions of greatly shortening a scanning wait time in a handoff process of a STA, greatly shortening a time for a roaming handoff of the STA, and implementing fast roaming of the STA in inter-frequency networking. The functions may be implemented by hardware, or may be implemented by hardware executing corresponding software. The hardware or software includes one or more modules corresponding to the foregoing functions.

Still another embodiment of this application provides a station that has functions of greatly shortening a scanning wait time in a handoff process of a STA, greatly shortening a time for a roaming handoff of the STA, and implementing fast roaming of the STA in inter-frequency networking. The functions may be implemented by hardware, or may be implemented by hardware executing corresponding software. The hardware or software includes one or more modules corresponding to the foregoing functions.

Still another aspect of the embodiments of this application provides a central control device, and the central control device may include: a transceiver, configured to communicate with an apparatus other than the central control device; a memory, configured to store a computer executable instruction; and one or more processors connected to the memory and the transceiver by using a bus. The processor is configured to execute the computer executable instruction and one or more computer programs stored in the memory, where the one or more computer programs include an instruction, and when the instruction is executed by the central control device, the central control device performs the method according to the first aspect or any optional implementation of the first aspect.

Still another aspect of the embodiments of this application provides a station, and the station may include: a transceiver, configured to communicate with an apparatus other than the station; a memory, configured to store a computer executable instruction; and one or more processors connected to the memory and the transceiver by using a bus. The processor is configured to execute the computer executable instruction and one or more computer programs stored in the memory, where the one or more computer programs include an instruction, and when the instruction is executed by the station, the station performs the method according to the second aspect or any optional implementation of the second aspect.

Still another aspect of the embodiments of this application provides a wireless communications apparatus, and the wireless communications apparatus may include:

at least one processor, a memory, a transceiver circuit, and a bus system, where the processor, the memory, and the transceiver circuit are coupled by using the bus system, the wireless communications apparatus communicates with a remote access unit by using the transceiver circuit, the memory is configured to store a program instruction; and the at least one processor is configured to execute the program instruction stored in the memory, so that the wireless communications apparatus performs the operations performed by the central control device in the method according to the first aspect of the embodiments of this application. The wireless communications apparatus may be a central control device, or may be a chip that is applied to the central control device and that performs corresponding functions.

Still another aspect of the embodiments of this application provides a wireless communications apparatus, and the wireless communications apparatus may include:

at least one processor, a memory, a transceiver circuit, and a bus system, where the processor, the memory, and the transceiver circuit are coupled by using the bus system, the wireless communications apparatus communicates with a remote access unit by using the transceiver circuit, the memory is configured to store a program instruction; and the at least one processor is configured to execute the program instruction stored in the memory, so that the wireless communications apparatus performs the operations performed by the station in the method according to the second aspect of the embodiments of this application. The wireless communications apparatus may be a station, or may be a chip that is applied to the station and that performs corresponding functions.

Still another aspect of the embodiments of this application provides a storage medium. It should be noted that the technical solutions of this application essentially, or the part contributing to the prior art, or all or some of the technical solutions may be implemented in a form of a software product, and the computer software product is stored in the storage medium, is configured to store a computer software instruction used by the foregoing central control device or station, and includes programs designed for the central control device or the station to perform the foregoing aspects.

The storage medium includes any medium, such as a USB flash drive, a removable hard disk, a read-only memory (read-only memory, ROM), a random access memory (random access memory, RAM), a magnetic disk, or an optical disc that can store program code.

Still another aspect of the embodiments of this application provides a computer program product including an instruction, and when the computer program product runs on a computer, the computer performs the methods according to the foregoing aspects or any optional implementation of the foregoing aspects.

### BRIEF DESCRIPTION OF DRAWINGS

To describe the technical solutions in the embodiments of this application more clearly, the following briefly describes the accompanying drawings required for describing the embodiments and the prior art. Apparently, the accompanying drawings in the following description show merely some embodiments of this application, and other drawings may be derived from these accompanying drawings.
FIG. 1 is a typical signaling flowchart of a roaming handoff performed by a STA;
FIG. 2 is a schematic diagram of statistics on delays of each handoff phase;
FIG. 3 is a schematic flowchart of a background pre-scan;
FIG. 4 is a schematic diagram of channel distribution in a WLAN network;
FIG. 5 is a diagram of a system architecture to which an embodiment of this application is applied;
FIG. 6 is a schematic diagram of an embodiment of a channel switching method according to an embodiment of this application;
FIG. 7 is a schematic diagram of an embodiment of a channel switching method according to an embodiment of this application;
FIG. 8 is a schematic diagram of an embodiment of a central control device according to an embodiment of this application;
FIG. 9 is a schematic diagram of an embodiment of a station according to an embodiment of this application;
FIG. 10 is a schematic diagram of an embodiment of a central control device according to an embodiment of this application; and
FIG. 11 is a schematic diagram of an embodiment of a station according to an embodiment of this application.

### DESCRIPTION OF EMBODIMENTS

Embodiments of this application provide a roaming handoff method, to greatly shorten a scanning wait time in a handoff process of a STA, greatly shorten a time for a roaming handoff of the STA, and implement fast roaming of the STA in inter-frequency networking.

To make persons skilled in the art understand the technical solutions in this application better, the following describes the technical solutions in the embodiments of this application with reference to the accompanying drawings in the embodiments of this application. Apparently, the described embodiments are merely some but not all of the embodiments of this application. All the embodiments based on this application shall fall within the protection scope of this application.

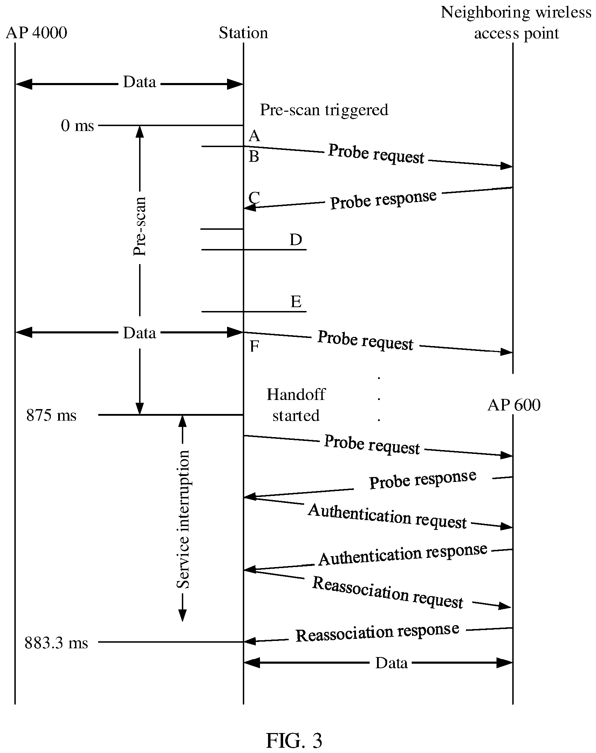

In an implementation, a background pre-scan (background pre-scan) method is used in a roaming handoff. FIG. 3 is a schematic flowchart of a background pre-scan. To be specific, a pre-scan threshold greater than a handoff threshold is set, and when signal quality decreases to the pre-scan threshold, a STA actively performs a background pre-scan. After the background pre-scan ends, the signal quality resumes a decrease. When the signal quality decreases to the handoff threshold, an active scanning process is initiated by using a channel obtained from the background pre-scan.

However, a long-time background pre-scan severely affects normal communication. To avoid affecting normal communication, a background pre-scan needs to be completed within 10 ms. In a light-load condition and a non high-density condition, fewer APs around the STA can use the technology. However, in a high-density environment, because of a relatively large quantity of APs and channels around the STA, usually, a time of more than 50 ms is required to ensure that the STA can receive more than 99% of PROBE RESPONSE (probe response) frames. Consequently, use of the technology in a high-density environment severely affects normal communication.

In another implementation, a specification of spectrum measurement in a wireless local area network is specified in the 802.11k protocol specification. The formulated specification reflects a requirement of the wireless local area network for intelligent use of spectrum resources.

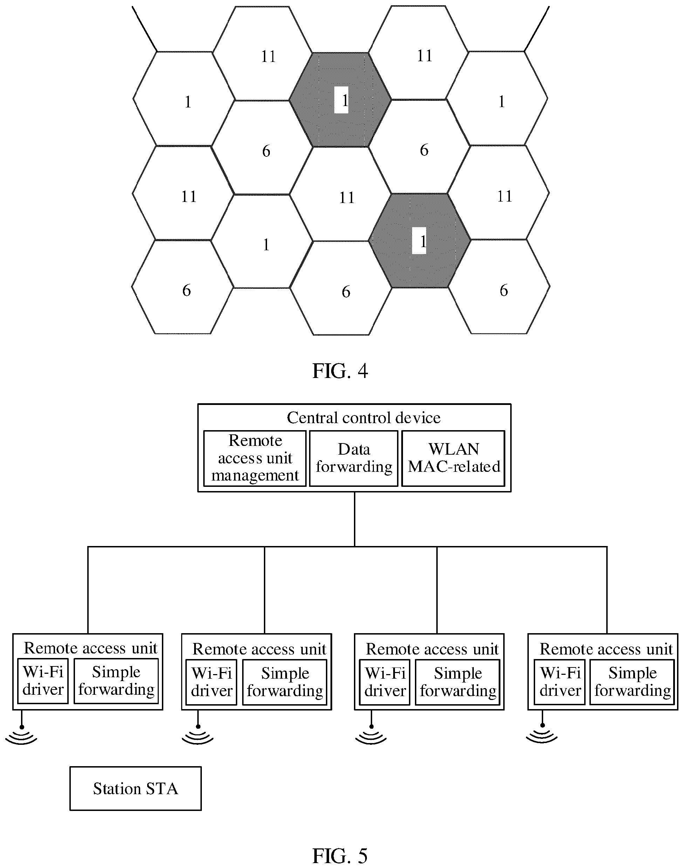

A STA and an AP exchange information about neighboring APs. During roaming, the STA scans only channels on which the neighboring APs are located, thereby reducing unnecessary channel scans, and reducing a time to detect an operating channel of the AP. FIG. 4 is a schematic diagram of channel distribution in a WLAN network.

In a high-density scenario, there are six or more neighboring APs, and an average scanning time of active scans is 30 ms, and an average scanning time of passive scans is 300 ms. A maximum time of an active scan and a passive scan is respectively 60 ms and 600 ms. The idea of this manner is to greatly shorten an interval between two consecutive scans, so as to reduce a channel scanning time. For example, 10 ms that is listed in Table 1 is actually almost a minimum time that cannot be reduced in an active scan with a relatively small interval between two consecutive scans. According to research in academia, a time of 10 ms and a time of 15 ms are recommended respectively for an active scan and a passive scan in a light-load scenario and non-high-density scenario. In a high-density scenario, because channel resources are occupied, a scanning wait time of more than 50 ms is required to ensure reception of a PROBE RESPONSE frame.

**Table 1**

| Scan Type | Interval | Scan duration |
|---|---|---|
| Active scan | 10 ms | 30 ms |
| Passive scan | 100 ms | 300 ms |

FIG. 5 is an architectural diagram of a system to which an embodiment of this application is applied. This application resolves a problem that a time for a roaming handoff of a STA in inter-frequency networking is excessively long. According to the technical solutions of this application, a roaming handoff in inter-frequency networking can be implemented within a relatively short time.

FIG. 5 shows a system for implementing fast roaming in inter-frequency networking, including a central control device and a remote access unit. The central control device is connected to a plurality of remote access units, and the central control device is responsible for management of remote access units, configuration delivery for remote access units, and reassociation and authentication of terminals. The remote access unit directly establishes a WLAN connection to a STA, and sends a WLAN packet to the STA and receives a WLAN packet sent by the STA. The central control device needs to include at least a remote access unit management module, a data forwarding module, and a WLAN media access control (medium access control, MAC) processing module. The remote access unit needs to include at least a wireless fidelity (wireless fidelity, WIFI) driver module and a simple forwarding module.

A core apparatus in this application is a WLAN AP/ a radio controller (access controller, AC), possibly related to a WLAN AC, a central AP, and a remote access unit/a remote radio unit (remote radio unit, RRU). If the central control device is used to control access behavior or roaming handoff behavior of a STA in an RRU, and a fast roaming handoff in inter-frequency networking is implemented by using the system architecture shown in FIG. 5, both software reconstruction (a specific AP is reconstructed as a node having a central control function) and hardware reconstruction (a device such as a switch or a router that has a central control function is deployed in a network) may be included in this application. The central control device in this application may be an AC, a central AP, or an AP that has a function of a central control node, or may be a server, a switch, or a router, or may be another device. This is not specifically limited.

In this embodiment of this application, the central control device selects an appropriate target remote access unit for the STAbased on a location and a displacement vector of the STA, sends a channel switching instruction to the STA, where the channel switching instruction carries indication information of the target remote access unit, and instructs the target remote access unit to reserve a preferential access right for the STA, that is, the target remote access unit preferentially replies to an access request of the STA with a response message. The STA actively switches back to an original operating channel after a handoff fails, and instructs an original remote access unit to reserve a preferential access right for the STA. If the STA fails to switch back to the original operating channel, the central control device may instruct all remote access units to reserve a preferential access right for the STA.

Compared with the prior art, in this embodiment of this application, the central control device sends indication information that is for channel switching and that is of an appropriate target remote access unit to the STA, and controls the target remote access unit to reserve a preferential access right for the STA, and preferentially reply to a connection request from the STA. In this way, a scanning wait time in a handoff process of the STA can be greatly shortened, a time for a roaming handoff of the STA can be greatly reduced, and fast roaming of the STA in inter-frequency networking can be implemented.

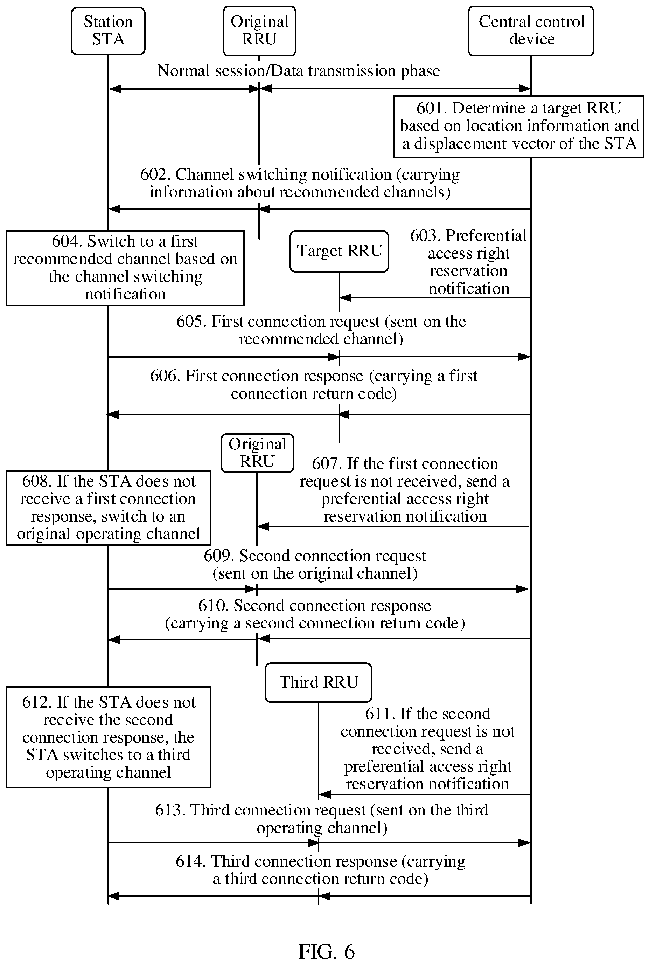

The following further describes the technical solutions of this application by way of embodiments. FIG. 6 is a schematic diagram of an embodiment of a channel switching method according to an embodiment of this application.

That the central control device is connected to a plurality of remote access units (RRUs) is used as an example for description. A plurality of RRUs are directly connected to the central control device, and the STA roams between the plurality of RRUs controlled by the central control device. The method includes the following steps.

601. The central control device determines a first recommended RRU based on positioning information and a displacement vector of the STA.

The central control device selects a recommended RRU as a target RRU based on the positioning information and the displacement vector of the STA, and determines that a channel on which the first recommended RRU operates is the first recommended channel.

602. The central control device sends a channel switching notification to an original RRU.

The central control device sends the channel switching notification, which may also be referred to as a channel switching instruction, to the original RRU. The channel switching notification may carry a channel switching announcement element. The channel switching announcement element may be indication information of the first recommended channel.

603. The central control device instructs the target RRU to reserve a preferential access right for the STA.

The central control device instructs the target RRU to reserve a preferential access right for the STA, where the preferential access right indicates that when receiving a connection request of the STA, the target RRU preferentially replies with a connection response frame and preferentially provides access for the STA.

Optionally, the central control device may further set a first timer (Timer 1) and waits the STA to send a first connection request frame (a PROBE 1 frame or a REASSOC 1 frame) to perform reconnection.

It should be noted that a time sequence of step 602 and step 603 is not limited.

604. The STA switches to the first recommended channel based on the channel switching notification.

After receiving the channel switching notification, the STA switches from an original operating channel to the first recommended channel based on the indication information of the first recommended channel that is included in the channel switching notification, where the original operating channel corresponds to the original RRU, and the first recommended channel corresponds to the target RRU.

605. The STA sends a first connection request to the target RRU.

The STA sends the first connection request frame (REASSOC 1) to the target RRU by using the first recommended channel. Optionally, the STA may further start a second timer Timer 2 and waits for a first connection response frame (PROBE RESPONSE 1 or REASSOC ACK 1). After receiving the first connection request, the target RRU preferentially forwards the first connection request to the central control device based on a preferential access right reservation notification.

606. The central control device sends a first connection response to the target RRU.

After receiving the first connection request frame, the central control device may clear the first timer (Timer 1), and reply to the target RRU with a first connection response frame (a REASSOC ACK 1), where the first connection response frame includes a first connection return code. If a connection fails, a failure cause is indicated in the first connection return code, and the first timer (Timer 1) is started, waiting for the STA to send a second connection request frame (REASSOC 2). After receiving the first connection response, the target RRU preferentially forwards the first connection response to the STA based on the preferential access right reservation notification by using the first recommended channel.

Optionally, after receiving the first connection response frame (REASSOC ACK 1), the STA may clear the second timer (Timer 2). If the first connection return code indicates that a connection succeeds, the STA successfully accesses the target RRU, indicating that a roaming handoff succeeds.

607. The central control device instructs the target RRU to reserve a preferential access right for the STA if the central control device does not receive the first connection request.

Specifically, the step may include: If the central control device does not receive the first connection request frame after the first timer has timed out, the central control device instructs the original RRU on the original operating channel to reserve a preferential access right for the STA.

Optionally, a first timer (Timer 1) may also be set, waiting for the STA to send a second connection request, until the central control device receives the second connection request frame of the STA and replies with a second connection response indicating that a connection succeeds.

608. If the STA does not receive the first connection response, the STA switches to the original operating channel.

If the STA does not receive, after the second timer has timed out, the first connection response frame sent by the central control device, or a received first connection response frame indicates that a connection fails, the STA may switch to the original operating channel.

609. The STA sends a second connection request to the target RRU.

After switching to the original operating channel, the STA may send a second connection request frame (REASSOC 2) to the original RRU on the original operating channel. Optionally, the second timer (Timer 2) may be restarted, waiting for the central control device to send a second connection response frame (REASSOC ACK 2). After receiving the second connection request, the target RRU preferentially forwards the second connection request to the central control device based on the preferential access right reservation notification.

610. The central control device sends a second connection response to the target RRU.

After receiving the second connection request frame (REASSOC 2), the central control device may clear the first timer (Timer 1), and reply to the original RRU with the second connection response frame (REASSOC ACK 2) by using the original operating channel, to indicate that a connection succeeds. The second connection response frame includes a second connection return code. After receiving the second connection response, the original RRU preferentially forwards the second connection response to the STA based on the preferential access right reservation notification by using the original operating channel.

It should be noted that, if a connection fails, a failure cause is indicated in the second connection return code, and the first timer (Timer 1) is started, waiting for the STA to send a third connection request frame.

Optionally, after receiving the second connection response frame (REASSOC ACK 2), the STA may clear the second timer (Timer 2). If the connection return code indicates that a connection succeeds, and the STA is successfully connected to the original RRU on the original operating channel, the central control device subsequently restarts a handoff procedure in this solution based on a handoff determining result.

611. If the central control device does not receive the second connection request, the central control device instructs other target RRUs to reserve apriority for the STA.

Specifically, the step may include: if the central control device does not receive the second connection request frame after the first timer (Timer 1) has timed out, the central control device instructs all RRUs or other RRUs (different from the target RRU and/or the original RRU) to reserve a preferential access right for the STA.

612. If the STA does not receive the second connection response, the STA switches to a third operating channel.

If the STA does not receive, after the second timer (Timer 2) has timed out, the second connection response frame (REASSOC ACK 2) sent by the central control device, or a received first connection response frame indicates that a connection fails, the STA may switch to the third operating channel.

It should be noted that, the third operating channel is a channel in other channels different from the first recommended channel and the original operating channel in a plurality of operating channels that correspond to RRUs around the STA.

613. The STA sends a third connection request to a third RRU.

After switching to the third operating channel, the STA may send a third connection request frame (REASSOC 3) to the third RRU on the third operating channel. Optionally, the second timer (Timer 2) may be restarted, waiting for the central control device to send a third connection response frame (REASSOC ACK 3). After receiving the third connection request, the third RRU preferentially forwards the third connection request to the central control device based on the preferential access right reservation notification.

614. The central control device sends a third connection response to the third RRU.

After receiving the third connection request frame, the third RRU operating on the third operating channel reports the third connection request frame to the central control device. After receiving the third connection request frame (REASSOC 3), the central control device may clear the first timer (Timer 1), and control the third RRU operating on the third operating channel to preferentially provide access for the STA, and reply with a third connection response frame, to indicate that a connection succeeds. In this case, the STA successfully accesses the third RRU on the third operating channel, and a roaming handoff succeeds.

It should be noted that step 607 to step 614 are optional steps.

Optionally, in some embodiments of this application, if the central control device does not receive the first connection request, the central control device instructs other RRUs to reserve a preferential access right for the STA. The step may specifically include: if the central control device does not receive the first connection request frame after the first timer has timed out, the central control device instructs other RRUs to reserve a preferential access right for the STA. Optionally, the first timer (Timer 1) may be set, waiting for the STA to send the second connection request, until the central control device receives the second connection request frame of the STA and replies with the second connection response indicating that a connection succeeds.

That if the STA does not receive the first connection response, the STA switches to the third operating channel may specifically include: the STA switches from the first recommended channel to the third operating channel if the STA does not receive, after the second timer has timed out, the first connection response frame sent by the central control device, or the received first connection response frame indicates that a connection fails.

For example, according to actual test data in the industry, a channel switching delay is usually 0.1 ms, and a delay from sending of a REASSOC frame to receiving of a REASSOC ACK is approximately 0.6 ms. The central control device controls the RRU to reserve a preferential access right for the STA, preferentially provide access for the STA after receiving a connection request of the STA, and make a reply that indicates a successful connection. Therefore, a time interval (Timer 2) from a time of initiating a connection request by the STA after switching from to a channel to a time of performing subsequent channel switching by the STA after a handoff failure is determined may be set to be small enough, for example, may be set to 0.6 ms.

In most cases, a channel (namely, the first recommended channel), selected by the central control device, on which a first recommended RRU operates is an appropriate channel, and the STA can successfully perform connection on the new channel through one time of channel switching, that is, a roaming handoff is completed within 1 ms. In some cases, if the first recommended channel selected by the central control device is inaccurate, channel switching may be performed for the second or the third time. Because the central control device always controls the RRU to reserve a preferential access right for the STA, a time interval between two consecutive times of switching may be set to be very small, for example, set to 0.6 ms to 1 ms. In some other cases, the STA needs to initiate a handoff request for three times, and an entire roaming handoff procedure can also be completed within approximately 5.2 ms.

In this embodiment of this application, the central control device selects an appropriate target remote access unit for the STAbased on a location and a displacement vector of the STA, sends a channel switching instruction to the STA by using the original operating channel, where the channel switching instruction carries channel indication information of the target remote access unit, and the central control device instructs the target remote access unit to reserve a preferential access right for the STA, and preferentially reply to an access request of the STA with a response message. Optionally, the STA actively switches back to the original operating channel after a handoff access to the target remote access unit fails, and instructs the original remote access unit to reserve a preferential access right for the STA. If a handoff access to the original remote access unit fails, the central control device instructs the other remote access units different from the target remote access unit and the original remote access unit to reserve a preferential access right for the STA.

Compared with the prior art, in this embodiment of this application, the central control device sends the channel on which the recommended target remote access unit operates to the STA, and controls the remote access unit to reserve a preferential access right for the STA, preferentially reply to a connection request of the STA, and preferentially provide access for the STA. In this way, a scanning wait time in a handoff process of the STA can be greatly shortened, a time for a roaming handoff of the STA can be greatly reduced, and fast roaming of the STA in inter-frequency networking can be implemented.

Compared with the prior art, improvements of this embodiment of this application are as follows: This application applies an architecture in which a central control device controls a plurality of access points, where the central control device may obtain a target handoff access point of the STA based on information about a location and a displacement vector of the STA, and control the target access point to reserve a preferential access right for the STA. In this way, a time for scanning a target channel and a scanning wait time can be greatly reduced, and a fast roaming handoff in inter-frequency networking can be implemented.

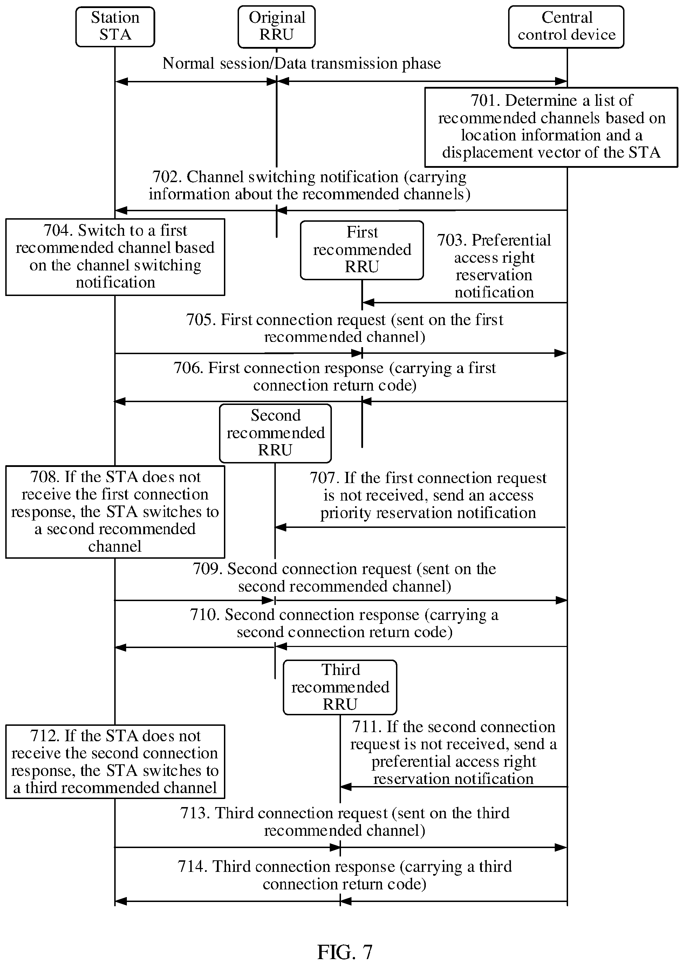

FIG. 7 is a schematic diagram of an embodiment of a channel switching method according to an embodiment of this application. The method includes the following steps.

701. A central control device determines a list of recommended channels based on positioning information and a displacement vector of a STA.

The central control device selects a plurality of possible recommended target RRUs for the STA based on a location and the displacement vector of the STA, and channels corresponding to the plurality of possible recommended target RRUs constitute the list of recommended channels. It can be understood that the list of recommended channels includes at least one target RRU in a priority sequence.

702. The central control device sends a channel switching notification to an original RRU.

The central control device sends the channel switching notification, which may also be referred to as a channel switching instruction, to the original RRU. The channel switching notification may carry a list of recommended channels. The list of recommended channels may be generated from the plurality of recommended RRUs that are listed based on recommended priorities. An operating channel corresponding to a first recommended RRU is a first recommended channel, an operating channel corresponding to a second recommended RRU is a second recommended channel, and so on.

703. The central control device instructs the first recommended RRU to reserve a preferential access right for the STA.

The central control device instructs the first recommended RRU to reserve a preferential access right for the STA. Optionally, a first timer (Timer 1) may be further set. The preferential access right indicates that when receiving a connection request of the STA, the first recommended RRU preferentially replies with a connection response frame and preferentially provides access for the STA.

It should be noted that a time sequence of step 702 and step 703 is not limited.

704. The STA switches to the first recommended channel based on the channel switching notification.

The STA first switches from an original operating channel to the first recommended channel based on a sequence of the channels in the list of recommended channels that is carried in the channel switching notification, where the original operating channel corresponds to the original RRU, and the first recommended channel corresponds to the target RRU.

705. The STA sends a first connection request to the first recommended RRU.

The STA sends a first connection request frame (REASSOC 1) to the first recommended RRU by using the first recommended channel. Optionally, the STA may also set a second timer (Timer 2), and waits for a first connection response frame. After receiving the first connection request, the first recommended RRU preferentially forwards the first connection request to the central control device based on a preferential access right reservation notification.

706. The central control device sends a first connection response to the first recommended RRU.

After receiving the first connection request, the central control device may clear the first timer (Timer 1), and control the first recommended RRU to reply to the STA with a first connection response frame (REASSOC ACK 1), where the first connection response frame includes a first connection return code. If a connection fails, a failure cause is indicated in the first connection return code, and the first timer (Timer 1) is started, waiting for the STA to send a second connection request frame. After receiving the first connection response, the first recommended RRU preferentially forwards the first connection response to the STA based on the preferential access right reservation notification by using the first recommended channel.

Optionally, after receiving a first connection response frame (REASSOC ACK 1) message, the STA may clear the second timer (Timer 2). If the first connection return code indicates that a connection succeeds, it means that the STA successfully accesses the first recommended RRU, indicating that a roaming handoff succeeds.

707. If the central control device does not receive the first connection request, the central control device instructs a second recommended RRU to reserve a preferential access right for the STA.

Specifically, the step may include: if the central control device does not receive the REASSOC 1 message after the timer 1 has timed out, the central control device instructs the second recommended RRU to reserve a preferential access right for the STA.

Optionally, the first timer (Timer 1) may also be set, waiting for the STAto send a second connection request, until the central control device receives a second connection request frame of the STA and replies with a second connection response indicating that a connection succeeds.

708. If the STA does not receive the first connection response, the STA switches to the second recommended channel.

If the STA does not receive, after the second timer (Timer 2) has timed out, the first connection response frame sent by the central control device, or a received first connection response frame indicates that a connection fails, the STA switches to the second recommended channel. The second recommended channel is a channel in the list of recommended channels, and a priority of the first recommended channel is higher than a priority of the second recommended channel.

709. The STA sends a second connection request to the second recommended RRU.

After switching to the second recommended channel, the STA may send a second connection request frame (REASSOC 2) message to the second recommended RRU on the second recommended channel. Optionally, the second timer may be further restarted, waiting for the central control device to send a second connection response frame. After receiving the second connection request, the second recommended RRU preferentially forwards the second connection request to the central control device based on the preferential access right reservation notification.

710. The central control device sends a second connection response to the second recommended RRU.

After receiving the second connection request frame (REASSOC 2), the central control device may clear the first timer (Timer 1), and control the second recommended RRU to reply to the STA with a second connection response frame (REASSOC ACK 2) message. The second connection response frame includes a second connection return code. After receiving the second connection response, the second recommended RRU preferentially forwards the second connection response to the STA based on the preferential access right reservation notification by using the original operating channel.

It should be noted that, if a connection fails, a failure cause is indicated in the second connection return code, and the first timer (Timer 1) is started, waiting for the STA to send a third connection request frame.

Optionally, after receiving the second connection response frame (REASSOC ACK2) message, the STA may clear the second timer (Timer 2). If the return code indicates that a connection succeeds, the STA is successfully connected to the second recommended RRU on the second recommended channel.

711. If the central control device does not receive the second connection request, the central control device instructs other recommended RRUs to reserve a preferential access right for the STA.

Specifically, the step may include: if the central control device does not receive the second connection request frame (REASSOC 2) after the first timer (Timer 1) has timed out, the central control device instructs all recommended RRUs or other RRUs (different from the first recommended RRU and/or the second recommended RRU) to reserve a preferential access right for the STA.

712. If the STA does not receive the second connection response, the STA switches to a third recommended channel.

If the STA does not receive, after the second timer (Timer 2) has timed out, the second connection response frame (REASSOC ACK 2) sent by the central control device, or a received second connection response frame indicates that a connection fails, the STA may switch to the third recommended channel that is in the list of recommended channels.

713. The STA sends a third connection request to a third recommended RRU.

After switching to the third recommended channel, the STA may send a third connection request frame (REASSOC 3) to the third recommended RRU on the third recommended channel. Optionally, the second timer (Timer 2) may be further restarted, waiting for the central control device to send a third connection response frame (REASSOC ACK 3). After receiving the third connection request, the third recommended RRU preferentially forwards the third connection request to the central control device based on the preferential access right reservation notification.

714. The central control device sends a third connection response to the third recommended RRU.

After receiving the third connection request, the central control device may clear the first timer Timer 1, and preferentially control the third recommended RRU operating on the third recommended channel to reply with a third connection response frame (PROBE RESPONSE 3), to indicate that a handoff succeeds. In this case, the STA successfully accesses the third recommended RRU on the third recommended channel, and a roaming handoff succeeds.

In this embodiment of this application, the central control device selects a plurality of appropriate target remote access units for the STA based on a location and a displacement vector of the STA, to obtain a list of remote access units that are recommended for access; and sends the channel switching instruction to the STA by using the original operating channel, where the channel switching instruction carries the list of remote access units that are recommended for access. In addition, the central control device instructs one by one, based on a sequence in the list of remote access units that are recommended for access and based on a timeout status of the timer, the target remote access units to reserve a preferential access right for the STA. The STA initiates handoffs on the recommended channels one by one based on priorities for recommendation in the list of recommended channels, until a handoff succeeds.

Compared with the prior art, in this embodiment of this application, the central control device sends the list of recommended remote access units to the STA, and controls the target remote access units to reserve a preferential access right for the STA and preferentially reply to a connection request of the STA. In this way, a scanning wait time in a handoff process of the STA can be greatly shortened, a time for a roaming handoff of the STA can be greatly reduced, and fast roaming of the STA in inter-frequency networking can be implemented.

Compared with the embodiment shown in FIG. 6, improvements of this embodiment of this application are as follows: in this embodiment, the channel switching notification carries the list of recommended channels, and therefore a switching sequence of recommended channels for the STA is more flexible but with a function supporting the list of recommended channels required on the STA side.

From a perspective of product implementation, for the foregoing technical solutions of the present invention, an AP may be used to serve as a central control device. From a perspective of a network topology, use of a central control device is obscure. However, whether an implementation of the technical solution is applied to implement a fast roaming handoff in inter-frequency networking can be comprehensively determined by using data such as packet capture and a handoff waiting time of the STA.

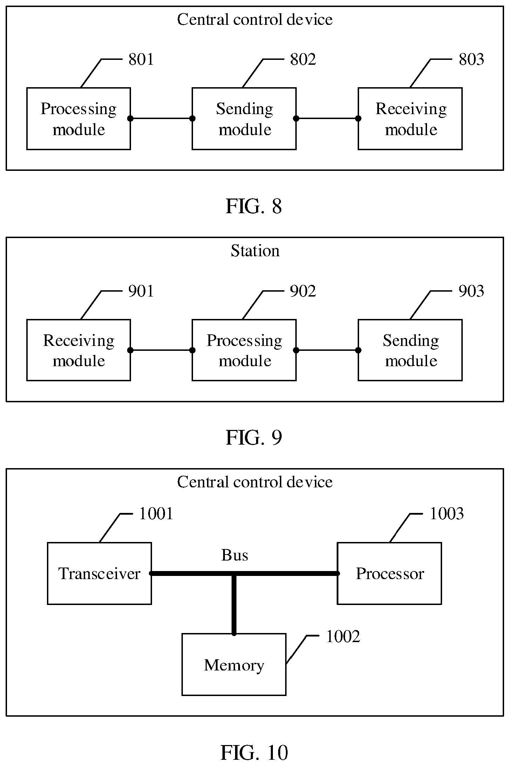

The foregoing describes the roaming handoff method in the embodiments of this application, and the following separately describes a central control device and a station in the embodiments of this application. FIG. 8 is a schematic diagram of an embodiment of a central control device according to an embodiment of this application, and the device includes the following modules:
a processing module 801, configured to determine at least one target remote access unit RRU based on a location and a displacement vector of a station;
a sending module 802, configured to: send a channel switching instruction to an original RRU, where the channel switching instruction includes at least one target RRU; send a first preferential access right reservation notification to a first target RRU, where the first target RRU is one of the at least one target RRU; and send a first connection response to the first target RRU, where the first connection response includes a first connection return code; and
a receiving module 803, configured to receive a first connection request sent by the first target RRU.

Optionally, in some embodiments of this application, the channel switching instruction includes: a list of recommended channels, where the list of recommended channels includes the at least one target RRU in a priority sequence.

Optionally, in some embodiments of this application,
the sending module 802 is further configured to: send a second preferential access right reservation notification to the original RRU if the central control device does not receive the first connection request; and send a second connection response to the original RRU, where the second connection response includes a second connection return code; and
the receiving module 803 is further configured to receive a second connection request sent by the original RRU.

Optionally, in some embodiments of this application,
the sending module 802 is further configured to: send a third preferential access right reservation notification to a second target RRU if the central control device does not receive the second connection request; and send a third connection response to the second target RRU, where the third connection response includes a third connection return code; and
a receiving module 803 is further configured to receive a third connection request sent by the second target RRU.

Optionally, in some embodiments of this application,
the sending module 802 is specifically configured to: send the second preferential access right reservation notification to the original RRU if the central control device does not receive the first connection request within preset duration.

FIG. 9 is a schematic diagram of an embodiment of a station according to an embodiment of this application, and the station includes the following modules:
a receiving module 901, configured to: receive a channel switching instruction sent by an original remote access unit RRU, where the channel switching instruction includes at least one target RRU; and receive a first connection response sent by a first target RRU, where the first connection response includes a first connection return code;
a processing module 902, configured to switch from an original operating channel to a first recommended channel based on the channel switching instruction, where an original RRU corresponds to the original operating channel, and the first recommended channel corresponds to the first target RRU; and
a sending module 903, configured to send a first connection request to the first target RRU by using the first recommended channel, where the first target RRU is one of the at least one target RRU; and receive, by using the first recommended channel, the first connection response sent by the first target RRU, where the first connection response includes the first connection return code.

Optionally, in some embodiments of this application, the channel switching instruction includes: a list of recommended channels, where the list of recommended channels includes the at least one target RRU in a priority sequence.

Optionally, in some embodiments of this application,
the processing module 902 is further configured to switch from the first recommended channel to the original operating channel if the station does not receive, within first preset duration, the first connection response sent by the first target RRU, or the first connection return code indicates that a connection fails;
the sending module 903 is further configured to send a second connection request to the original RRU by using the original operating channel; and
the receiving module 901 is further configured to receive, by using the original operating channel, a second connection response sent by the original RRU, where the second connection response includes a second connection return code.

Optionally, in some embodiments of this application,
the processing module 902 is further configured to: switch from the original operating channel to a second recommended channel if the station does not receive, within second preset duration, the second connection response sent by the original RRU, or the second connection return code indicates that a connection fails, where the second recommended channel corresponds to a second target RRU;
the sending module 903 is further configured to send a third connection request to the second target RRU by using the second recommended channel, where the second target RRU is one of the at least one target RRU; and
the receiving module 901 is further configured to receive, by using the second recommended channel, a third connection response sent by the second target RRU, where the third connection response includes a third connection return code.

FIG. 10 is a schematic diagram of an embodiment of a central control device according to an embodiment of this application, and the device includes the following modules:
a transceiver 1001, a memory 1002, and a processor 1003, where the transceiver 1001, the memory 1002, and the processor 1003 are connected to each other by using a bus.

The transceiver 1001 is configured to: send a channel switching instruction to an original RRU, where the channel switching instruction includes at least one target RRU; send a first preferential access right reservation notification to a first target RRU, where the first target RRU is one of the at least one target RRU; receive a first connection request sent by the first target RRU; and send a first connection response to the first target RRU, where the first connection response includes a first connection return code.

The processor 1003 is configured to determine at least one target remote access unit RRU based on a location and a displacement vector of a station.

Optionally, in some embodiments of this application, the channel switching instruction includes: a list of recommended channels, where the list of recommended channels includes the at least one target RRU in a priority sequence.

Optionally, in some embodiments of this application,
the transceiver 1001 is further configured to: send a second preferential access right reservation notification to the original RRU if the central control device does not receive the first connection request; receive a second connection request sent by the original RRU; and send a second connection response to the original RRU, where the second connection response includes a second connection return code.

Optionally, in some embodiments of this application,
the transceiver 1001 is further configured to: send a third preferential access right reservation notification to a second target RRU if the central control device does not receive the second connection request; receive a third connection request sent by the second target RRU; and send a third connection response to the second target RRU, where the third connection response includes a third connection return code.

Optionally, in some embodiments of this application,
the transceiver 1001 is specifically configured to: send the second preferential access right reservation notification to the original RRU if the central control device does not receive the first connection request within preset duration.

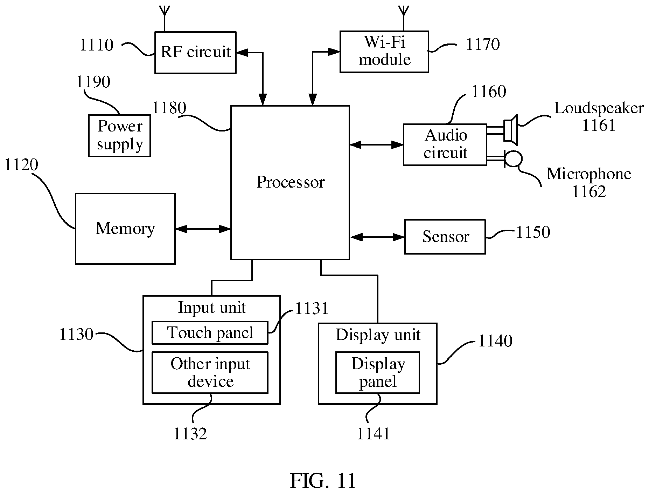

FIG. 11 is a schematic diagram of an embodiment of a station according to an embodiment of this application. The station may include any terminal device such as a mobile phone, a tablet computer, a personal digital assistant (personal digital assistant, PDA), a sales terminal (point of sales, POS), or a vehicle-mounted computer. For example, the station is a mobile phone, and may include:

Components such as a radio frequency (radio frequency, RF) circuit 1110, a memory 1120, an input unit 1130, a display unit 1140, a sensor 1150, an audio circuit 1160, a wireless fidelity (wireless fidelity, WiFi) module 1170, a processor 1180, and a power supply 1190. Persons skilled in the art may understand that a structure of a mobile phone shown in FIG. 11 constitutes no limitation on the mobile phone, and the mobile phone may include more or fewer components than those shown in the figure, may combine some components, or may have a different component arrangement.

The following describes each constituent component of the mobile phone in detail with reference to FIG. 11.

The RF circuit 1110 may be configured to send and receive signals in an information sending and receiving process or a call process. Particularly, the RF circuit 110 receives downlink information from a base station, then sends the downlink information to the processor 1180 for processing. In addition, the RF circuit 1110 sends uplink data to the base station. The RF circuit 1110 usually includes but is not limited to an antenna, at least one amplifier, a transceiver, a coupler, a low noise amplifier (low noise amplifier, LNA), a duplexer, and the like. In addition, the RF circuit 1110 may further communicate with a network and another device through wireless communication. The wireless communication may use any communications standard or protocol, including but not limited to a global system for mobile communications (global system of mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short messaging service, SMS), and the like.

The memory 1120 may be configured to store a software program and a module. The processor 1180 executes various function applications of the mobile phone and data processing by running the software program and the module that are stored in the memory 1120. The memory 1120 may mainly include a program storage area and a data storage area. The program storage area may store an operating system, an application required by at least one function (such as a voice playback function and an image playback function), and the like. The data storage area may store data (such as audio data and a phone book) that is created based on use of the mobile phone, and the like. In addition, the memory 1120 may include a high speed random access memory, and may further include a nonvolatile memory such as at least one magnetic disk storage component, a flash memory, or another volatile solid-state storage component.

The input unit 1130 may be configured to: receive entered digits or character information, and generate a key signal input related to a user setting and function control of the mobile phone. Specifically, the input unit 1130 may include a touch panel 1131 and other input devices 1132. The touch panel 1131, also referred to as a touchscreen, may collect a touch operation (for example, an operation performed by a user on or near the touch panel 1131 by using any suitable object or accessory such as a finger or a stylus) performed by the user on or near the touch panel 1131, and may drive a corresponding connection apparatus based on a preset program. Optionally, the touch panel 1131 may include two parts: a touch detection apparatus and a touch controller. The touch detection apparatus detects a touch direction and position of the user, detects a signal brought by the touch operation, and transmits the signal to the touch controller. The touch controller receives touch information from the touch detection apparatus, converts the touch information into touch point coordinates, then sends the touch point coordinates to the processor 1180, and receives and executes a command sent by the processor 1180. In addition, the touch panel 1131 may be implemented in a plurality of types, such as a resistive type, a capacitive type, an infrared type, and a surface acoustic wave type. The input unit 1130 may further include the other input devices 1132 in addition to the touch panel 1131. Specifically, the other input devices 1132 may include but not limited to one or more of a physical keyboard, a function key (such as a volume control key or a power on/off key), a trackball, a mouse, a joystick, and the like.

The display unit 1140 may be configured to display information entered by the user or information provided for the user, and various menus of the mobile phone. The display unit 1140 may include a display panel 1141. Optionally, the display panel 1141 may be configured in a form of a liquid crystal display (liquid crystal display, LCD), an organic light-emitting diode (organic light-emitting diode, OLED), or the like. Further, the touch panel 1131 may cover the display panel 1141. After detecting a touch operation on or near the touch panel 1131, the touch panel 131 transmits the touch operation to the processor 1180 to determine a type of a touch event, and then the processor 1180 provides a corresponding visual output on the display panel 1141 based on the type of the touch event. Although the touch panel 1131 and the display panel 1141 are used as two independent parts in FIG. 11 to implement input and output functions of the mobile phone, in some embodiments, the touch panel 1131 and the display panel 1141 can be integrated to implement the input and output functions of the mobile phone.

The mobile phone may further include at least one sensor 1150, such as an optic sensor, a motion sensor, and another sensor. Specifically, the optic sensor may include an ambient light sensor and a proximity sensor. The ambient light sensor may adjust luminance of the display panel 1141 based on brightness of ambient light. The proximity sensor may turn off the display panel 1141 and/or backlight when the mobile phone approaches to an ear. As one type of the motion sensor, an accelerometer sensor may detect values of acceleration in all directions (usually, three axes), may detect a value and a direction of gravity when the accelerometer sensor is stationary, and may be used in an application for identifying a mobile phone posture (for example, screen switching between a landscape mode and a portrait mode, a related game, or magnetometer posture calibration), a function related to vibration identification (for example, a pedometer or a knock), and the like. Another sensor such as a gyroscope, a barometer, a hygrometer, a thermometer, or an infrared sensor may be further configured in the mobile phone. Details are not described herein.

The audio circuit 1160, a loudspeaker 1161, and a microphone 1162 may provide an audio interface between the user and the mobile phone. The audio circuit 1160 may transmit, to the loudspeaker 1161, an electric signal that is obtained after conversion of received audio data, and the loudspeaker 1161 converts the electric signal into a sound signal and outputs the sound signal. In addition, the microphone 1162 converts a collected sound signal into an electric signal, the audio circuit 1160 receives and converts the electric signal into audio data, and outputs the audio data to the processor 1180 for processing, and then processed audio data is sent to, for example, another mobile phone, by using the RF circuit 1110, or the audio data is output to the memory 1120 for further processing.

Wi-Fi is a short-distance wireless transmission technology. With the Wi-Fi module 1170, the mobile phone may help the user receive and send emails, browse a web page, access streaming media, and the like, providing a wireless broadband internet access for the user. Although the Wi-Fi module 1170 is shown in FIG. 11, it can be understood that the Wi-Fi module 170 is not a mandatory component of the mobile phone, and may be omitted based on a requirement without changing the essence of the present invention.

The processor 1180 is a control center of the mobile phone, connects each part of the entire mobile phone by using various interfaces and lines, and executes various functions and processes data of the mobile phone by running or executing the software program and/or the module stored in the memory 1120 and invoking data stored in the memory 1120, to perform overall monitoring on the mobile phone. Optionally, the processor 1180 may include one or more processing units. Preferably, an application processor and a modem processor may be integrated into the processor 1180. The application processor mainly processes an operating system, a user interface, an application, and the like. The modem processor mainly processes wireless communication. It can be understood that the modem processor may alternatively not be integrated into the processor 1180.

The mobile phone further includes the power supply 1190 (such as a battery) supplying power to the components. Preferably, the power supply may be logically connected to the processor 1180 by using a power management system, to implement functions such as management of charging, discharging, and energy consumption by using the power management system.

Although not shown, the mobile phone may further include a camera, a Bluetooth module, and the like, and details are not described herein.

In this embodiment of this application, the RF circuit 1110 is further configured to: receive a channel switching instruction sent by an original remote access unit RRU, where the channel switching instruction includes at least one target RRU; send a first connection request to a first target RRU by using a first recommended channel, where the first target RRU is one of the at least one target RRU; and receive, by using the first recommended channel, a first connection response sent by the first target RRU, where the first connection response includes a first connection return code.

The processor 1180 is further configured to switch from an original operating channel to the first recommended channel based on the channel switching instruction, where an original RRU corresponds to the original operating channel, and the first recommended channel corresponds to the first target RRU.

Optionally, in some embodiments of this application, the channel switching instruction includes: a list of recommended channels, where the list of recommended channels includes the at least one target RRU in a priority sequence.

Optionally, in some embodiments of this application,
the processor1180 is further configured to: switch from the first recommended channel to the original operating channel if the station does not receive, within first preset duration, the first connection response sent by the first target RRU, or the first connection return code indicates that a connection fails.

The RF circuit 1110 is further configured to: send a second connection request to the original RRU by using the original operating channel; and receive, by using the original operating channel, a second connection response sent by the original RRU, where the second connection response includes a second connection return code.

Optionally, in some embodiments of this application,
the processor 1180 is further configured to: switch from the original operating channel to a second recommended channel if the station does not receive, within second preset duration, the second connection response sent by the original RRU, or the second connection return code indicates that a connection fails, where the second recommended corresponds to a second target RRU.

The RF circuit 1110 is further configured to: send a third connection request to the second target RRU by using the second recommended channel, where the second target RRU is one of the at least one target RRU; and receive, by using the second recommended channel, a third connection response sent by the second target RRU, where the third connection response includes a third connection return code.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, some or all of the procedures or functions according to the embodiments of this application are generated. The computer may be a general-purpose computer, a special-purpose computer, a computer network, or another programmable apparatus. The computer instruction may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state drive Solid State Disk (SSD)), or the like.

It may be clearly understood by persons skilled in the art that for convenient and brief description, for a detailed working process of the described system, apparatus, and unit, refer to a corresponding process in the foregoing method embodiments. Details are described herein again.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods in the embodiments of this application. The storage medium includes any medium, such as a USB flash drive, a removable hard disk, a read-only memory (read-only memory, ROM), a random access memory (random access memory, RAM), a magnetic disk, or an optical disc that can store program code.

In sum, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments without departing from the scope of the technical solutions of the embodiments of this application.

## Claims

1. A roaming handoff method, used in Inter-frequency networking for access in a high-density scenario in a wireless local area network, comprising:
determining (601), by a central control device, at least one target remote access unit RRU based on a location and a displacement vector of a station;
sending (602), by the central control device, a channel switching instruction to an original RRU, wherein the channel switching instruction comprises at least one target RRU;
sending (603), by the central control device, a first preferential access right reservation notification to a first target RRU to instruct the first target RRU to reserve a preferential access right for the station, wherein the first target RRU is one of the at least one target RRU; wherein the preferential access right indicates that when receiving a connection request of the station, the target RRU preferentially replies with a connection response and preferentially provides access for the station;
receiving (605), by the central control device, a first connection request of the station preferentially sent by the first target RRU; and
sending (606), by the central control device, a first connection response to the first target RRU, wherein the first connection response comprises a first connection return code.

2. The method according to claim 1, wherein the method further comprises:
sending, by the central control device, a second preferential access right reservation notification to the original RRU if the central control device does not receive the first connection request;
receiving, by the central control device, a second connection request sent by the original RRU; and
sending, by the central control device, a second connection response to the original RRU, wherein the second connection response comprises a second connection return code.

3. The method according to claim 2, wherein the method further comprises:
sending, by the central control device, a third preferential access right reservation notification to a second target RRU if the central control device does not receive the second connection request;
receiving, by the central control device, a third connection request sent by the second target RRU; and
sending, by the central control device, a third connection response to the second target RRU, wherein the third connection response comprises a third connection return code.

4. The method according to claim 2, wherein the sending, by the central control device, a second preferential access right reservation notification to the original RRU if the central control device does not receive the first connection request comprises:
sending, by the central control device, the second preferential access right reservation notification to the original RRU if the central control device does not receive the first connection request within preset duration.

5. A roaming handoff method, used in Inter-frequency networking for access in a high-density scenario in a wireless local area network, comprising:
receiving (602), by a station, a channel switching instruction sent by an original remote access unit RRU, wherein the channel switching instruction comprises at least one target RRU;
switching (604), by the station, from an original operating channel to a first recommended channel based on the channel switching instruction, wherein the original RRU corresponds to the original operating channel, and the first recommended channel corresponds to the first target RRU;
sending (605), by the station, a first connection request to the first target RRU by using the first recommended channel, wherein the first target RRU is one of the at least one target RRU; wherein the first connection request sent by the station is operable to instruct the first target RRU to preferentially forward said request to a central control device based on a preferential access right reservation notification, where the preferential access right indicates that when receiving a connection request of the station, the target RRU preferentially replies with a connection response and preferentially provides access for the station;
and
receiving (606), by the station by using the first recommended channel, a first connection response sent by the first target RRU, wherein the first connection response comprises a first connection return code.

6. The method according to claim 5, wherein the method further comprises:
switching, by the station, from the first recommended channel to the original operating channel if the station does not receive, within first preset duration, the first connection response sent by the first target RRU, or the first connection return code indicates that a connection fails;
sending, by the station, a second connection request to the original RRU by using the original operating channel; and
receiving, by the station by using the original operating channel, a second connection response sent by the original RRU, wherein the second connection response comprises a second connection return code.

7. The method according to claim 6, wherein the method further comprises:
switching, by the station, from the original operating channel to a second recommended channel if the station does not receive, within second preset duration, the second connection response sent by the original RRU, or the second connection return code indicates that a connection fails, wherein the second recommended channel corresponds to the second target RRU;
sending, by the station, a third connection request to the second target RRU by using the second recommended channel, wherein the second target RRU is one of the at least one target RRU; and
receiving, by the station by using the second recommended channel, a third connection response sent by the second target RRU, wherein the third connection response comprises a third connection return code.

8. A central control device, used in Inter-frequency networking for access in a high-density scenario in a wireless local area network, comprising:
a processing module (801), configured to determine at least one target remote access unit RRU based on a location and a displacement vector of a station;
a sending module (802), configured to: send a channel switching instruction to an original RRU, wherein the channel switching instruction comprises at least one target RRU; send a first preferential access right reservation notification to a first target RRU to instruct the first target RRU to reserve a preferential access right for the station, wherein the first target RRU is one of the at least one target RRU, wherein the preferential access right indicates that when receiving a connection request of the station, the target RRU preferentially replies with a connection response and preferentially provides access for the station; and send a first connection response to the first target RRU, wherein the first connection response comprises a first connection return code; and
a receiving module (803), configured to receive a first connection request of the station preferentially sent by the first target RRU.

9. The central control device according to claim 8, wherein
the sending module is further configured to: send a second preferential access right reservation notification to the original RRU if the central control device does not receive the first connection request; and send a second connection response to the original RRU, wherein the second connection response comprises a second connection return code; and
a receiving module is further configured to receive a second connection request sent by the original RRU.

10. A station, used in Inter-frequency networking for access in a high-density scenario in a wireless local area network, comprising:
a receiving module (901), configured to: receive a channel switching instruction sent by an original remote access unit RRU, wherein the channel switching instruction comprises at least one target RRU; and receive, by using the first recommended channel, a first connection response sent by the first target RRU, wherein the first connection response comprises a first connection return code;
a processing module (902), configured to switch from an original operating channel to the first recommended channel based on the channel switching instruction, wherein the original RRU corresponds to the original operating channel, and the first recommended channel corresponds to the first target RRU; and
a sending module (903), configured to send a first connection request to the first target RRU by using the first recommended channel, wherein the first target RRU is one of the at least one target RRU;
wherein the first connection request sent by the station is operable to instruct the first target RRU to preferentially forward said request to a central control device based on a preferential access right reservation notification, where the preferential access right indicates that when receiving a connection request of the station, the target RRU preferentially replies with a connection response and preferentially provides access for the station.

11. The roaming handoff method of any of claims 1 and 5, the central control device of claim 8 or the station according to claim 10, wherein the channel switching instruction comprises: a list of recommended channels, wherein the list of recommended channels comprises the at least one target RRU in a priority sequence.

12. A central control device, used in Inter-frequency networking for access in a high-density scenario in a wireless local area network, comprising:
a transceiver, configured to communicate with an apparatus other than the central control device;
a memory, configured to store a computer executable instruction; and
one or more processors, connected to the memory and the transceiver by using a bus, wherein when the processor executes the computer executable instruction stored in the memory, the central control device performs the method according to any one of claims 1 to 4.

13. A station, used in Inter-frequency networking for access in a high-density scenario in a wireless local area network, comprising:
a transceiver, configured to communicate with an apparatus other than the station;
a memory, configured to store a computer executable instruction; and
one or more processors, connected to the memory and the transceiver by using a bus, wherein when the processor executes the computer executable instruction stored in the memory, the station performs the method according to any one of claims 5 to 7.

14. A computer-readable storage medium, used in Inter-frequency networking for access in a high-density scenario in a wireless local area network, comprising an instruction, wherein when the instruction runs on a computer of a central control device, the computer is operable to perform the method according to any one of claims 1 to 4, or when the instruction runs on a computer of a station, the computer is operable to perform the method according to any of claims 5 to 7.

15. A computer program product used in Inter-frequency networking for access in a high-density scenario in a wireless local area network, comprising the computer-readable storage medium according to claim 14.

## Patentansprüche

1. Roaming-Übergabeverfahren, das in Inter-Frequenz-Netzwerken für einen Zugriff in einem Szenario hoher Dichte in einem drahtlosen lokalen Netzwerk verwendet wird, das Folgendes umfasst:
Bestimmen (601), durch eine zentrale Steuervorrichtung, wenigstens einer Zielfernzugriffseinheit (RRU) basierend auf einem Standort und einem Verschiebungsvektor einer Station;
Senden (602), durch die zentrale Steuervorrichtung, einer Kanalwechselanweisung an eine ursprüngliche RRU, wobei die Kanalwechselanweisung wenigstens eine Ziel-RRU umfasst;
Senden (603), durch die zentrale Steuervorrichtung, einer ersten Vorzugszugriffsrechtsreservierungsbenachrichtigung an eine erste Ziel-RRU, um die erste Ziel-RRU anzuweisen, ein Vorzugszugriffsrecht für die Station zu reservieren, wobei die erste Ziel-RRU eine der wenigstens einen Ziel-RRU ist; wobei das Vorzugszugriffsrecht angibt, dass, wenn eine Verbindungsanforderung der Station empfangen wird, die Ziel-RRU mit einer Verbindungsantwort vorzugsweise rückmeldet und den Zugriff für die Station vorzugsweise bereitstellt;
Empfangen (605), durch die zentrale Steuervorrichtung, einer ersten Verbindungsanforderung der Station, die durch die erste Ziel-RRU vorzugsweise gesendet wird; und
Senden (606), durch die zentrale Steuervorrichtung, einer ersten Verbindungsantwort an die erste Ziel-RRU, wobei die erste Verbindungsantwort einen ersten Verbindungsrückkehrcode umfasst.

2. Verfahren nach Anspruch 1, wobei das Verfahren ferner Folgendes umfasst:
Senden, durch die zentrale Steuervorrichtung, einer zweiten Vorzugszugriffsrechtsreservierungsbenachrichtigung an die ursprüngliche RRU, falls die zentrale Steuervorrichtung die erste Verbindungsanforderung nicht empfängt;
Empfangen, durch die zentrale Steuervorrichtung, einer zweiten Verbindungsanforderung, die durch die ursprüngliche RRU gesendet wird; und
Senden, durch die zentrale Steuervorrichtung, einer zweiten Verbindungsantwort an die ursprüngliche RRU, wobei die zweite Verbindungsantwort einen zweiten Verbindungsrückkehrcode umfasst.

3. Verfahren nach Anspruch 2, wobei das Verfahren ferner Folgendes umfasst:
Senden, durch die zentrale Steuervorrichtung, einer dritten Vorzugszugriffsrechtsreservierungsbenachrichtigung an eine zweite Ziel-RRU, falls die zentrale Steuervorrichtung die zweite Verbindungsanforderung nicht empfängt;
Empfangen, durch die zentrale Steuervorrichtung, einer dritten Verbindungsanforderung, die durch die zweite Ziel-RRU gesendet wird; und
Senden, durch die zentrale Steuervorrichtung, einer dritten Verbindungsantwort an die zweite Ziel-RRU, wobei die dritte Verbindungsantwort einen dritten Verbindungsrückkehrcode umfasst.

4. Verfahren nach Anspruch 2, wobei das Senden, durch die zentrale Steuervorrichtung, einer zweiten Vorzugszugriffsrechtsreservierungsbenachrichtigung an die ursprüngliche RRU, falls die zentrale Steuervorrichtung die erste Verbindungsanforderung nicht empfängt, Folgendes umfasst:
Senden, durch die zentrale Steuervorrichtung, der zweiten Vorzugszugriffsrechtsreservierungsbenachrichtigung an die ursprüngliche RRU, falls die zentrale Steuervorrichtung die erste Verbindungsanforderung nicht innerhalb einer voreingestellten Dauer empfängt.

5. Roaming-Übergabeverfahren, das in Inter-Frequenz-Netzwerken für den Zugriff in einem Szenario hoher Dichte in einem drahtlosen lokalen Netzwerk verwendet wird, das Folgendes umfasst:
Empfangen (602), durch eine Station, einer Kanalwechselanweisung, die durch eine ursprüngliche Fernzugriffseinheit (RRU) gesendet wird, wobei die Kanalwechselanweisung wenigstens eine Ziel-RRU umfasst;
Wechseln (604), durch die Station, von einem ursprünglichen Betriebskanal zu einem ersten empfohlenen Kanal basierend auf der Kanalwechselanweisung, wobei die ursprüngliche RRU dem ursprünglichen Betriebskanal entspricht und der erste empfohlene Kanal der ersten Ziel-RRU entspricht;
Senden (605), durch die Station, einer ersten Verbindungsanforderung an die erste Ziel-RRU durch Verwenden des ersten empfohlenen Kanals, wobei die erste Ziel-RRU eine der wenigstens einen Ziel-RRU ist; wobei die erste Verbindungsanforderung, die durch die Station gesendet wird, betriebsfähig ist, um die erste Ziel-RRU anzuweisen, die Anforderung an eine zentrale Steuervorrichtung basierend auf einer Vorzugszugriffsrechtsreservierungsbenachrichtigung vorzugsweise weiterzuleiten, wobei das Vorzugszugriffsrecht angibt, dass, wenn eine Verbindungsanforderung der Station empfangen wird, die Ziel-RRU mit einer Verbindungsantwort vorzugsweise rückmeldet und den Zugriff für die Station vorzugsweise bereitstellt;
und
Empfangen (606), durch die Station, durch Verwenden des ersten empfohlenen Kanals, einer ersten Verbindungsantwort, die durch die erste Ziel-RRU gesendet wird, wobei die erste Verbindungsantwort einen ersten Verbindungsrückkehrcode umfasst.

6. Verfahren nach Anspruch 5, wobei das Verfahren ferner Folgendes umfasst:
Wechseln, durch die Station, von dem ersten empfohlenen Kanal zu dem ursprünglichen Betriebskanal, falls die Station innerhalb der ersten voreingestellten Dauer die erste Verbindungsantwort, die durch die erste Ziel-RRU gesendet wird, nicht empfängt, oder der erste Verbindungsrückkehrcode angibt, dass eine Verbindung fehlschlägt;
Senden, durch die Station, einer zweiten Verbindungsanforderung an die ursprüngliche RRU durch Verwenden des ursprünglichen Betriebskanals; und
Empfangen, durch die Station, durch Verwenden des ursprünglichen Betriebskanals, einer zweiten Verbindungsantwort, die durch die ursprüngliche RRU gesendet wird, wobei die zweite Verbindungsantwort einen zweiten Verbindungsrückkehrcode umfasst.

7. Verfahren nach Anspruch 6, wobei das Verfahren ferner Folgendes umfasst:
Wechseln, durch die Station, von dem ursprünglichen Betriebskanal auf einen zweiten empfohlenen Kanal, falls die Station innerhalb der zweiten voreingestellten Dauer die zweite Verbindungsantwort, die durch die ursprüngliche RRU gesendet wird, nicht empfängt, oder der zweite Verbindungsrückkehrcode angibt, dass eine Verbindung fehlschlägt, wobei der zweite empfohlene Kanal der zweiten Ziel-RRU entspricht;
Senden, durch die Station, einer dritten Verbindungsanforderung an die zweite Ziel-RRU durch Verwenden des zweiten empfohlenen Kanals, wobei die zweite Ziel-RRU eine der wenigstens einen Ziel-RRU ist; und
Empfangen, durch die Station, durch Verwenden des zweiten empfohlenen Kanals, einer dritten Verbindungsantwort, die durch die zweite Ziel-RRU gesendet wird, wobei die dritte Verbindungsantwort einen dritten Verbindungsrückkehrcode umfasst.

8. Zentrale Steuervorrichtung, die in Inter-Frequenz-Netzwerken für den Zugriff in einem Szenario hoher Dichte in einem drahtlosen lokalen Netzwerk verwendet wird, die Folgendes umfasst:
ein Verarbeitungsmodul (801), das konfiguriert ist, um wenigstens eine Zielfernzugriffseinheit (RRU) basierend auf einem Standort und einem Verschiebungsvektor einer Station zu bestimmen;
ein Sendemodul (802), das für Folgendes konfiguriert ist: Senden einer Kanalwechselanweisung an eine ursprüngliche RRU, wobei die Kanalwechselanweisung wenigstens eine Ziel-RRU umfasst; Senden einer ersten Vorzugszugriffsrechtsreservierungsbenachrichtigung an eine erste Ziel-RRU, um die erste Ziel-RRU anzuweisen, ein Vorzugszugriffsrecht für die Station zu reservieren, wobei die erste Ziel-RRU eine der wenigstens einen Ziel-RRU ist, wobei das Vorzugszugriffsrecht angibt, dass, wenn eine Verbindungsanforderung der Station empfangen wird, die Ziel-RRU mit einer Verbindungsantwort vorzugsweise rückmeldet und der Station den Zugriff vorzugsweise bereitstellt; und Senden einer ersten Verbindungsantwort an die erste Ziel-RRU, wobei die erste Verbindungsantwort einen ersten Verbindungsrückkehrcode umfasst; und
ein Empfangsmodul (803), das konfiguriert ist, um eine erste Verbindungsanforderung der Station zu empfangen, die durch die erste Ziel-RRU vorzugsweise gesendet wird.

9. Zentrale Steuervorrichtung nach Anspruch 8, wobei
das Sendemodul ferner für Folgendes konfiguriert ist: Senden einer zweiten Vorzugszugriffsrechtsreservierungsbenachrichtigung an die ursprüngliche RRU, falls die zentrale Steuervorrichtung die erste Verbindungsanforderung nicht empfängt; und Senden einer zweiten Verbindungsantwort an die ursprüngliche RRU, wobei die zweite Verbindungsantwort einen zweiten Verbindungsrückkehrcode umfasst; und
ein Empfangsmodul ferner konfiguriert ist, um eine zweite Verbindungsanforderung zu empfangen, die durch die ursprünglichen RRU gesendet wird.

10. Station, die in Inter-Frequenz-Netzwerken für den Zugriff in einem Szenario hoher Dichte in einem drahtlosen lokalen Netzwerk verwendet wird, die Folgendes umfasst:
ein Empfangsmodul (901), das für Folgendes konfiguriert ist: Empfangen einer Kanalwechselanweisung, die durch eine ursprünglichen Fernzugriffseinheit (RRU) gesendet wird, wobei die Kanalwechselanweisung wenigstens eine Ziel-RRU umfasst; und Empfangen, durch Verwenden des ersten empfohlenen Kanals, einer ersten Verbindungsantwort, die durch die erste Ziel-RRU gesendet wird, wobei die erste Verbindungsantwort einen ersten Verbindungsrückkehrcode umfasst;
ein Verarbeitungsmodul (902), das konfiguriert ist, um von einem ursprünglichen Betriebskanal zu dem ersten empfohlenen Kanal basierend auf der Kanalwechselanweisung zu wechseln, wobei die ursprüngliche RRU dem ursprünglichen Betriebskanal entspricht und der erste empfohlene Kanal der ersten Ziel-RRU entspricht; und
ein Sendemodul (903), das konfiguriert ist, um eine erste Verbindungsanforderung an die erste Ziel-RRU durch Verwenden des ersten empfohlenen Kanals zu senden, wobei die erste Ziel-RRU eine der wenigstens einen Ziel-RRU ist;
wobei die erste Verbindungsanforderung, die durch die Station gesendet wird, betriebsfähig ist, um die erste Ziel-RRU anzuweisen, die Anforderung an eine zentrale Steuervorrichtung basierend auf einer Vorzugszugriffsrechtsreservierungsbenachrichtigung vorzugsweise weiterzuleiten, wobei das Vorzugszugriffsrecht angibt, dass, wenn eine Verbindungsanforderung der Station empfangen wird, die Ziel-RRU mit einer Verbindungsantwort vorzugsweise rückmeldet und den Zugriff für die Station vorzugsweise bereitstellt.

11. Roaming-Übergabeverfahren nach einem der Ansprüche 1 und 5, zentrale Steuervorrichtung nach Anspruch 8 oder Station nach Anspruch 10, wobei die Kanalwechselanweisung Folgendes umfasst: eine Liste empfohlener Kanäle, wobei die Liste empfohlener Kanäle die wenigstens eine Ziel-RRU in einer Prioritätssequenz umfasst.

12. Zentrale Steuervorrichtung, die in Inter-Frequenz-Netzwerken für den Zugriff in einem Szenario hoher Dichte in einem drahtlosen lokalen Netzwerk verwendet wird, die Folgendes umfasst:
einen Sendeempfänger, der konfiguriert ist, um mit einer anderen Einrichtung als der zentralen Steuervorrichtung zu kommunizieren;
einen Speicher, der konfiguriert ist, um eine computerausführbare Anweisung zu speichern; und
einen oder mehrere Prozessoren, die mit dem Speicher und dem Sendeempfänger durch Verwenden eines Busses verbunden sind, wobei, wenn der Prozessor die computerausführbare Anweisung, die in dem Speicher gespeichert ist, ausführt, die zentrale Steuervorrichtung das Verfahren nach einem der Ansprüche 1 bis 4 durchführt.

13. Station, die in Inter-Frequenz-Netzwerken für den Zugriff in einem Szenario hoher Dichte in einem drahtlosen lokalen Netzwerk verwendet wird, die Folgendes umfasst:
einen Sendeempfänger, der konfiguriert ist, um mit einer anderen Einrichtung als der Station zu kommunizieren;
einen Speicher, der konfiguriert ist, um eine computerausführbare Anweisung zu speichern; und
einen oder mehrere Prozessoren, die mit dem Speicher und dem Sendeempfänger durch Verwenden eines Busses verbunden sind, wobei, wenn der Prozessor die computerausführbare Anweisung, die in dem Speicher gespeichert ist, ausführt, die Station das Verfahren nach einem der Ansprüche 5 bis 7 durchführt.

14. Computerlesbares Speichermedium, das in Inter-Frequenz-Netzwerken für den Zugriff in einem Szenario hoher Dichte in einem drahtlosen lokalen Netzwerk verwendet wird, das eine Anweisung umfasst, wobei, wenn die Anweisung auf einem Computer einer zentralen Steuervorrichtung abläuft, der Computer betriebsfähig ist, um das Verfahren nach einem der Ansprüche 1 bis 4 durchzuführen, oder wenn die Anweisung auf einem Computer einer Station abläuft, der Computer betriebsfähig ist, um das Verfahren nach einem der Ansprüche 5 bis 7 durchzuführen.

15. Computerprogrammprodukt, das in Inter-Frequenz-Netzwerken für den Zugriff in einem Szenario hoher Dichte in einem drahtlosen lokalen Netzwerk verwendet wird, das das computerlesbare Speichermedium nach Anspruch 14 umfasst.

## Revendications

1. Procédé de transfert en itinérance, utilisé dans un réseautage inter-fréquence pour un accès dans un scénario haute densité dans un réseau local sans fil, comprenant :
la détermination (601), par un dispositif de commande central, d'au moins une unité d'accès à distance cible RRU sur la base d'un emplacement et d'un vecteur de déplacement d'une station ;
l'envoi (602), par le dispositif de commande central, d'une instruction de commutation de canal à une RRU d'origine, l'instruction de commutation de canal comprenant au moins une RRU cible ;
l'envoi (603), par le dispositif de commande central, d'une première notification de réservation de droit d'accès préférentiel à une première RRU cible pour donner une instruction à la première RRU cible de réserver un droit d'accès préférentiel pour la station, la première RRU cible étant l'une de l'au moins une RRU cible ; le droit d'accès préférentiel indiquant que lors de la réception d'une demande de connexion de la station, la RRU cible répondant préférentiellement par une réponse de connexion et fournissant préférentiellement un accès à la station ;
la réception (605), par le dispositif central de commande, d'une première demande de connexion de la station préférentiellement envoyée par la première RRU cible ; et
l'envoi (606), par le dispositif de commande central, d'une première réponse de connexion à la première RRU cible, la première réponse de connexion comprenant un premier code de retour de connexion.

2. Procédé selon la revendication 1, le procédé comprenant en outre :
l'envoi, par le dispositif de commande central, d'une deuxième notification de réservation de droit d'accès préférentiel à la RRU d'origine si le dispositif de commande central ne reçoit pas la première demande de connexion ;
la réception, par le dispositif central de commande, d'une deuxième demande de connexion envoyée par la RRU d'origine ; et
l'envoi, par le dispositif de commande central, d'une deuxième réponse de connexion à la RRU d'origine, la seconde réponse de connexion comprenant un second code de retour de connexion.

3. Procédé selon la revendication 2, le procédé comprenant en outre :
l'envoi, par le dispositif de commande central, d'une troisième notification de réservation de droit d'accès préférentiel à une seconde RRU cible si le dispositif de commande central ne reçoit pas la deuxième demande de connexion ;
la réception, par le dispositif de commande central, d'une troisième demande de connexion envoyée par la seconde RRU cible ; et
l'envoi, par le dispositif de commande central, d'une troisième réponse de connexion à la seconde RRU cible, la troisième réponse de connexion comprenant un troisième code de retour de connexion.

4. Procédé selon la revendication 2, l'envoi, par le dispositif de commande central, d'une seconde notification de réservation de droit d'accès préférentiel à la RRU d'origine si le dispositif de commande central ne reçoit pas la première demande de connexion comprenant :
l'envoi, par le dispositif de commande central, de la seconde notification de réservation de droit d'accès préférentiel à la RRU d'origine si le dispositif de commande central ne reçoit pas la première demande de connexion dans la durée prédéfinie.

5. Procédé de transfert en itinérance, utilisé dans un réseautage inter-fréquence pour un accès dans un scénario haute densité dans un réseau local sans fil, comprenant :
la réception (602), par une station, d'une instruction de commutation de canal envoyée par une unité d'accès à distance RRU d'origine, l'instruction de commutation de canal comprenant au moins une RRU cible ;
la commutation (604), par la station, d'un canal d'exploitation d'origine à un premier canal recommandé sur la base de l'instruction de commutation de canal, la RRU d'origine correspondant au canal d'exploitation d'origine, et le premier canal recommandé correspondant à la première RRU cible ;
l'envoi (605), par la station, d'une première demande de connexion à la première RRU cible en utilisant le premier canal recommandé, la première RRU cible étant l'une de l'au moins une RRU cible ; la première demande de connexion envoyée par la station est exploitable pour donner une instruction à la première RRU cible de retransmettre préférentiellement ladite demande à un dispositif de commande central sur la base d'une notification de réservation de droit d'accès préférentiel, où le droit d'accès préférentiel indique que lors de la réception d'une demande de connexion de la station, la RRU cible répond préférentiellement par une réponse de connexion et fournit préférentiellement l'accès à la station ;
et
la réception (606), par la station en utilisant le premier canal recommandé, d'une première réponse de connexion envoyée par la première RRU cible, la première réponse de connexion comprenant un premier code de retour de connexion.

6. Procédé selon la revendication 5, le procédé comprenant en outre :
la commutation, par la station, du premier canal recommandé au canal d'exploitation d'origine si la station ne reçoit pas, pendant la première durée prédéfinie, la première réponse de connexion envoyée par la première RRU cible, ou si le premier code de retour de connexion indique qu'une connexion échoue ;
l'envoi, par la station, d'une deuxième demande de connexion à la RRU d'origine en utilisant le canal d'exploitation d'origine ; et
la réception, par la station en utilisant le canal d'exploitation d'origine, d'une deuxième réponse de connexion envoyée par la RRU d'origine, la deuxième réponse de connexion comprenant un deuxième code de retour de connexion.

7. Procédé selon la revendication 6, le procédé comprenant en outre :
la commutation, par la station, du canal d'exploitation d'origine à un second canal recommandé si la station ne reçoit pas, dans la seconde durée prédéfinie, la deuxième réponse de connexion envoyée par la RRU d'origine, ou si le deuxième code de retour de connexion indique qu'une connexion échoue, le second canal recommandé correspondant à la seconde RRU cible ;
l'envoi, par la station, d'une troisième demande de connexion à la seconde RRU cible en utilisant le second canal recommandé, la seconde RRU cible étant l'une de l'au moins une RRU cible ; et
la réception, par la station en utilisant le second canal recommandé, d'une troisième réponse de connexion envoyée par la seconde RRU cible, la troisième réponse de connexion comprenant un troisième code de retour de connexion.

8. Dispositif de commande central, utilisé dans un réseautage inter-fréquence pour un accès dans un scénario haute densité dans un réseau local sans fil, comprenant :
un module de traitement (801), configuré pour déterminer au moins une unité d'accès à distance RRU cible sur la base d'un emplacement et d'un vecteur de déplacement d'une station ;
un module d'envoi (802), configuré pour : envoyer une instruction de commutation de canal à une RRU d'origine, l'instruction de commutation de canal comprenant au moins une RRU cible ; envoyer une première notification de réservation de droit d'accès préférentiel à une première RRU cible pour donner une instruction à la première RRU cible de réserver un droit d'accès préférentiel pour la station, la première RRU cible étant l'une de l'au moins une RRU cible, le droit d'accès préférentiel indiquant que lors de la réception d'une demande de connexion de la station, la RRU cible répond préférentiellement par une réponse de connexion et fournit préférentiellement un accès à la station ; et envoyer une première réponse de connexion à la première RRU cible, la première réponse de connexion comprenant un premier code de retour de connexion ; et
un module de réception (803), configuré pour recevoir une première demande de connexion de la station envoyée préférentiellement par la première RRU cible.

9. Dispositif selon la revendication 8,
le module d'envoi étant en outre configuré pour : envoyer une deuxième notification de réservation de droit d'accès préférentiel à la RRU d'origine si le dispositif de commande central ne reçoit pas la première demande de connexion ; et envoyer une deuxième réponse de connexion à la RRU d'origine, la deuxième réponse de connexion comprenant un deuxième code de retour de connexion ; et
un module de réception étant en outre configuré pour recevoir une deuxième demande de connexion envoyée par la RRU d'origine.

10. Station, utilisée dans un réseautage inter-fréquence pour l'accès dans un scénario haute densité dans un réseau local sans fil, comprenant :
un module de réception (901), configuré pour : recevoir une instruction de commutation de canal envoyée par une unité d'accès à distance d'origine RRU, l'instruction de commutation de canal comprenant au moins une RRU cible ; et recevoir, en utilisant le premier canal recommandé, une première réponse de connexion envoyée par la première RRU cible, la première réponse de connexion comprenant un premier code de retour de connexion ;
un module de traitement (902), configuré pour commuter d'un canal d'exploitation d'origine au premier canal recommandé sur la base de l'instruction de commutation de canal, la RRU d'origine correspondant au canal d'exploitation d'origine, et le premier canal recommandé correspondant à la première RRU cible ; et
un module d'envoi (903), configuré pour envoyer une première demande de connexion à la première RRU cible en utilisant le premier canal recommandé, la première RRU cible étant l'une de l'au moins une RRU cible ;
la première demande de connexion envoyée par la station pouvant servir à ordonner à la première RRU cible de retransmettre préférentiellement ladite demande à un dispositif de commande central sur la base d'une notification de réservation de droit d'accès préférentiel, où le droit d'accès préférentiel indique que lors de la réception d'une demande de connexion du la station, la RRU cible répond préférentiellement par une réponse de connexion et fournit préférentiellement l'accès à la station.

11. Procédé de transfert en itinérance selon l'une quelconque des revendications 1 et 5, le dispositif de commande central selon la revendication 8 ou la station selon la revendication 10, l'instruction de commutation de canal comprenant : une liste de canaux recommandés, la liste de canaux recommandés comprenant l'au moins une RRU cible dans une séquence de priorité.

12. Dispositif de commande central, utilisé dans un réseautage inter-fréquence pour un accès dans un scénario haute densité dans un réseau local sans fil, comprenant :
un émetteur-récepteur, configuré pour communiquer avec un appareil autre que le dispositif de commande central ;
une mémoire, configurée pour stocker une intruction exécutable par ordinateur ; et
un ou plusieurs processeurs, connectés à la mémoire et à l'émetteur-récepteur en utilisant un bus, lorsque le processeur exécute l'instruction exécutable par ordinateur stockée dans la mémoire, le dispositif de commande central effectuant le procédé selon l'une quelconque des revendications 1 à 4.

13. Station, utilisée dans un réseautage inter-fréquence pour l'accès dans un scénario haute densité dans un réseau local sans fil, comprenant :
un émetteur-récepteur, configuré pour communiquer avec un appareil autre que la station ;
une mémoire, configurée pour stocker une intruction exécutable par ordinateur ; et
un ou plusieurs processeurs, connectés à la mémoire et à l'émetteur-récepteur en utilisant un bus, lorsque le processeur exécute l'instruction exécutable par ordinateur stockée dans la mémoire, la station effectuant le procédé selon l'une quelconque des revendications 5 à 7.

14. Support de stockage lisible par ordinateur, utilisé dans un réseautage inter-fréquence pour un accès dans un scénario haute densité dans un réseau local sans fil, comprenant une instruction, lorsque l'instruction s'exécute sur un ordinateur d'un dispositif de commande central, l'ordinateur est exploitable pour effectuer le procédé selon l'une quelconque des revendications 1 à 4, ou lorsque l'instruction s'exécute sur un ordinateur d'une station, l'ordinateur est exploitable pour effectuer le procédé selon l'une quelconque des revendications 5 à 7.

15. Produit-programme informatique utilisé dans un réseautage inter-fréquence pour un accès dans un scénario haute densité dans un réseau local sans fil, comprenant le support de stockage lisible par ordinateur selon la revendication 14.
